(19) Europäisches Patentamt / European Patent Office / Office européen des brevets

(11) **EP 2 166 880 B1**

(12) **EUROPEAN PATENT SPECIFICATION**

(45) Date of publication and mention
of the grant of the patent:
**17.08.2011 Bulletin 2011/33**

(51) Int Cl.:
*A23L 1/24* *(2006.01)*    *A23L 1/0532* *(2006.01)*
*A23L 1/054* *(2006.01)*

(21) Application number: **08774208.6**

(22) Date of filing: **23.06.2008**

(86) International application number:
**PCT/EP2008/057930**

(87) International publication number:
**WO 2009/010371 (22.01.2009 Gazette 2009/04)**

(54) **CREAMY OPAQUE POURABLE SALAD DRESSING**

CREMIGE UNDURCHSICHTIGE GIESSBARE SALATSOSSE

SAUCE SALADE VERSABLE CRÉMEUSE ET OPAQUE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **18.07.2007 US 779665**

(43) Date of publication of application:
**31.03.2010 Bulletin 2010/13**

(73) Proprietors:
• **Unilever N.V.**
  **3012 AL Rotterdam (NL)**
  Designated Contracting States:
  **AT BE BG CH CZ DE DK EE ES FI FR GR HR HU
  IS IT LI LT LU LV MC NL NO PL PT RO SE SI SK TR**
• **Unilever PLC**
  **London**
  **Greater London EC4P 4BQ (GB)**
  Designated Contracting States:
  **CY GB IE MT**

(72) Inventors:
• **AQUINO, Leonardo, Jose, Sanchez**
  **Englewood Cliffs, New Jersey 07632 (US)**
• **GOLDEN, Rosemary, Antoinette**
  **Englewood Cliffs, New Jersey 07632 (US)**

(74) Representative: **Rosen Jacobson, Frans Lucas M.**
**Unilever Patent Group**
**Olivier van Noortlaan 120**
**3133 AT Vlaardingen (NL)**

(56) References cited:
**EP-A- 0 238 330    EP-A- 0 551 170
US-A- 6 060 106    US-B1- 6 544 573**

**Description**

FIELD OF THE INVENTION

The present invention is directed to a pourable, relatively non-viscous, salad dressing that is creamy, opaque, has an oil content of 10wt% or more, and has substantially no solid particulates. More particularly, the present invention relates to suspension of oil in a system of a pourable, relatively non-viscous, salad dressing that is creamy, opaque, has an oil content of 10 % or more, and has substantially no solid particulates.

BACKGROUND OF THE INVENTION

In 1851, George Gabriel Stokes derived an expression for the frictional force exerted on spherical objects with very small Reynolds numbers (e.g., very small particles) in a viscous fluid by solving the generally unsolvable Navier-Stokes equation:

$$F = 6 \pi r \eta v$$

where:

F is the frictional force
r is the Stokes radius of the particle
η is the fluid viscosity, and
V is the particle's speed

If the particles are falling in the viscous fluid by their own weight, then a terminal velocity, also known as the settling velocity, is reached when the frictional force combined with the buoyant force exactly balance the gravitational force. The resulting setting velocity is given by:

$$V_s = \frac{2}{9} \frac{r^2 g (P_p - P_f)}{\eta}$$

where:

$V_s$ is the particles' settling velocity (vertically downwards if $P_p > P_f$, upwards is $P_p < P_f$)
g is the acceleration due to gravity,
$P_p$ is the density of the particles, and
$P_f$ is the density of the fluid

For pourable salad dressings, since the density of oil particles (i.e., oil droplets suspended in aqueous medium) is less than the density of the fluid, one skilled in the art would expect the oil droplets to go to the surface, i.e. vertically upwards. This undesirable phenomena is known as creaming.
Also, for pourable salad dressings, since the viscosity is relatively low, the upwards velocity of oil particles should be high, so that the creaming phenomena would be expected to be observed relatively quickly.
The more oil in the pourable salad dressing, the more of a problem creaming should be because, the more oil droplets in the system, the more likely they are to coalesce into particles of larger diameter, thereby increasing the upwards velocity.
The present invention is aimed at ameliorating this phenomenon. Additionally, for a more complete understanding of the above and other features and advantages of the invention, references should be made to the following detailed description of the preferred embodiments.

ADDITIONAL INFORMATION

Wilson, et al., U.S. Patent No. 6,544,573 discloses a gum combination for liquid condiment systems.

Mars, European Patent Application No. 0 238 330 relates to modified emulsifiers for foods and creaming rates.

Breitbart, et al., U. S. Patent No. 6,060,106 discloses an opaque low fat salad dressing aiming to achieve an improved mouthfeel.

None of the additional information addresses the creaming phenomenon by achieving no creaming which is more likely to occur with higher oil or fat contents, by using a particular gum system, and preferably no other emulsifiers or thickeners. According to the present invention, no creaming occurs over a shelf storage of at least 5 to months, and preferably about ten months; relatively high oil levels are emulsified with relatively low viscosity; and the inventive pourable composition is capable of being dispensed as a spray.

SUMMARY OF THE INVENTION

The present invention is directed to a pourable and preferably sprayable, relatively non-viscous, salad dressing that is creamy, opaque, has an oil content of 10 % or more, has substantially no solid particulates, exhibits no creaming over a shelf storage period of at least 5 to months, and is capable of being dispensed as a spray . More particularly, the present invention relates to suspending of oil in a system of a pourable and/or sprayable, relatively non-viscous, salad dressing that is creamy, opaque, has an oil content of 10wt% or more, and has substantially no solid particulates. An advantageous feature of the present invention is that oil particles are suspended and remain so without creaming over the intended shelf life of the product, preferably about ten months. Preferred sprayable creamy opaque salad dressing, such as creamy French, creamy Ranch, and creamy Honey Mustard, are disclosed in accordance with the inventive composition. The cramy opaque salad dressing is easily dispensed from a dispensing article whereby a discharge volume of salad dressing is discharged which is equivalent to two Calories per spray.

The creamy opaque salad dressing composition of the present invention includes an aqueous system comprising water and a gum system. The water comprises 40% to 75% by weight of the composition, preferably 65 % to 75% by weight water. A gum system is used to keep the emulsified oil particles suspended in the product composition. Preferably, substantially no other emulsifiers (e.g. lecithin) or thickeners (e.g. starch maltodextrin) are used. The gum system comprises a combination of xanthan gum, an alginate, and a carrageenan. Preferably the alginate is propylene glycol alginate and the carrageenan is iota carrageenan. The products of the invention have 1% or less by weight of gums. Preferred amounts for the gums are 0.06% to 0.09% by weight of an alginate, 0.12% to 0.20 % by weight carrageenan and 0.10 to 0.20% by weight xanthan gum.

The food in which the invention is used is preferably a creamy opaque pourable and/or sprayable salad dressing, although the invention may be used to prepare other condiments that are creamy and opaque but relatively non-viscous. The compositions by weight invention are generally oil and water emulsions and include 10 % by weight triglycerides or more, preferably 10 % to 20 % by weight triglycerides. The triglyceride oil is most preferably soy bean oil used at about 12% by weight. The products of the invention are preferably low viscosity products. For example, the products may have viscosities of 1000 cps and below, especially 200 to 500 cps, and more preferably a viscosity of about 400 cps.

The salad dressing is substantially free of solid particulates. For example, tomato juice rather than puree is used to minimize solids. Substantially free of solid particulates as used herein means less than 0.5 wt% particulates having a particle diameter of 0.6 cm or more, based on total weight of the salad dressing composition.

Substantially free or substantially no, as used herein with reference to components other than the solid particulates discussed above, means less than 0.5 % based on total weight of the salad dressing composition.

Ambient as it refers to storage temperature herein means room temperature or temperatures in the range of 60 to 80 deg F (about 15 to about 27 deg C).

The term "comprising" is used herein in it ordinary meaning and means including, made up of, composed of, consisting and/or consisting essentially of. In other words, the term is defined as not being exhaustive of the steps, components, ingredients, or features to which it refers.

Except in the operating and comparative examples, or where otherwise explicitly indicated, all numbers in this description indicating amounts or ratios of material or conditions of reaction, physical properties of materials and/or use are to be understood as modified by the word "about".

DETAILED DESCRIPTION OF THE INVENTION

According to the present invention, a creamy opaque salad dressing composition includes, and preferably consists essentially of:

at least 10wt% triglyceride oil;

substantially no solids;

an aqueous phase comprising water and a gum system comprising a combination of carrageenan, xanthan gum, and alginate; wherein said water comprises 40% to 75% by weight of said salad dressing composition; wherein said gums comprise 1% or less by weight of said salad dressing composition;

the composition exhibiting no creaming and being opaque.

Preferably, the inventive composition is pourable and is capable of being dispensed as a spray.

Triglyceride Oil

The oil present in the creamy opaque salad dressings is an important contributor to the taste, texture, appearance, aroma, mouthfeel, and appearance of the same. Any food grade triglyceride oils may be used in the salad dressing compositions, such as including but not limited to soybean oil, olive oil, canola oil, rapeseed oil, sunflower seed oil, safflower oil, avocado oil, mustard oil, and other plant oils, and mixtures thereof. Preferred are oils which are liquid at ambient temperature The triglyceride oil is used in an amount of at least 10wt%, and as high as 65wt%, preferably 10wt% to 20wt% triglycerides, most preferably about 12wt% oil. In a more preferred embodiment, the oil used in this invention is soybean, sunflower or rapeseed oil or a mixture thereof; most preferably soybean oil.

It is noted that in lieu of oil or in combination with oil, conventional fat substitutes may be used. Preferred fat substitutes employable in this invention include fatty acid-esterified alkoxylated glycerin compositions as well as sucrose fatty acid esters. The former and latter are described in U.S. Patent Nos. 5,516,544 and 6,447,824, respectively . When employed, such conventional fat substitutes preferably make up at least 30wt%, and most preferably, at least 75wt% of the total weight of the oil used in the composition.

Aqueous System

The creamy opaque salad dressing composition of the present invention includes an aqueous system comprising water and a gum system. Water is used in the composition to hydrate the dry ingredients and to provide a balance amount in the composition, comprising 40 % to 75 % of the composition. Especially prefered are compositions wherein the water comprises 65% by weight to 75% by weight of the composition, including all ranges subsumed therein.

Substantially free of solid particulates as used herein means less than 0.5wt% particulates having a particle diameter of 0.6 cm or more. Examples of fine solids that may be used are mustard flour, salt, and tomato solids from tomato juice. Fine mustard flour may be used in an amount of less than 0.5wt%.

Gum System

The gum system comprises a combination of xanthan gum, an alginate, and a carrageenan. Xanthan (otherwise called xanthan gum) is a microbial exopolysaccharide produced by the naturally occurring bacterium *Xanthomonas campestris.* Xanthan gum is commercially available and is preferably sourced under the trademark Xanthan SF in order to achieve a sprayable composition. Alginates may be found in and isolated from various organisms, in particular from algae belonging to the order *Phaeophyceae* and soil bacteria such as *Azotobacter vinelandii* and *Azotobacter crococcum* and from several strains of *Pseudomonas* bacteria. Carrageenans are sulphated galactans which are extracted from red seaweeds belonging to the families *Gigartinaceae* and *Solieraceae.* They are based on repeating units of 1,3-linked galactopyranose and 1,4-linked-3,6-anhydrogalactopyranose, and vary in sulphate content.

Preferably the alginate is propylene glycol alginate (most preferably Kelcoloid SVF from ISP Alginates) and the carrageenan is iota carrageenan. A preferred source of iota carrageenan in accordance with the invention is sold as Viscarin SD 389. The products of the invention have 1% or less by weight of gums. Preferred amounts for the gums are 0.06% to 0.08% by weight of an alginate, 0.12 to 0.20 % by weight carrageenan and 0.10 to 0.20% by weight xanthan gum, including all ranges subsumed therein.

In a preferred embodiment, substantially no other gums, emulsifiers (e.g. no lecithin), or thickeners (e.g. starch, maltodextrin) are employed in the inventive compositions in order to achieve a creamy opaque salad dressing that consumers demand while avoiding a "pasty" look and taste.

In addition to the ingredients mentioned above, the pourable creamy opaque salad dressing of the invention may include many other ingredients typical for such compositions. Vinegar is often used and may be red wine vinegar, distilled white vinegar, or corn sugar cider vinegar. Vinegar may be present at, for example, 9% to 15% by weight. Various fruit and vegetable juices may be used, including apricot puree, tomato juice, onion puree, roasted garlic puree, garlic juice, onion juice, etc., as long as they do not exceed to specified solids content of solids of the specified minimum size.

Salt may be added in the form of sodium chloride granules. Salt is often included in an amount of 2% to 3 %, preferably 2.10 to 2.40 % by weight. If desired, a blend of seasonings may be employed, such as mustard flour, onion flavor, garlic flavor, and other flavorings, as long as they do not exceed to solid particulates limitation required herein. Other ingredients typically used in liquid pourable salad dressings may also be included, such as sorbic acid, vitamin E, EDTA, and beta carotene for color.

The viscosity of the compositions may be adjusted to suit a particular product and to work with a particular dispenser variation. The products of the invention are preferably low viscosity products. The viscosity of the compositions may range from about 100 to less than 1000 cps as measured on the Brookfield Viscometer, RVT, at room temperature and spindle speed of 110. Preferably, the viscosity ranges from 200 cps to 500 cps, more preferably, about 400 cps for the creamy opaque type salad dressing composition according to the present invention that is capable of being dispensed as a spray.

Preferred product specifications are as follows:

| | |
|---|---|
| PH | 2.85 - 3.30, more preferably 2.90 - 3.15 |
| ACID | 85-1.15 |
| SALT | 2.10 - 2.40 wt% |
| VISCOSITY | 200 - 500 centipoise (at room or ambient temperature) |
| DENSITY | 1.055 -1.085 g/ml |

In preparing the products of the invention, it is preferred to hydrate the stabilizers in water prior to mixing with other ingredients. The composition ingredients are then mixed and milled or mixed under high shear, such as in a colloid mill, in order to obtain the desired opacity.

Use

In use, the creamy opaque salad dressing composition may be poured onto a food, preferably a salad, or it may be dispensed as a spray from spray containers such as those available from the SeaquistPerfect Dispensing Company or from Saint Gobain Calmar Inc. or such as those disclosed in co-pending U.S. Patent Nos. U.S. 2007/0237878 A1 or U.S. 2007/0237864 A1. Preferably, a hand-held spray dispensing article is provided, comprising: a reservoir for receiving a liquid composition, the reservoir having a closed and an open end; an operating unit for dispensing the spray at least partially positioned over the reservoir at the open end, whereby said operating unit is in fluid communication with said reservoir, Preferably, a non-aerosol spray container is used. Most preferably, a spray container is used so as to deliver a uniform spray pattern of 7.6 cm to 12.7 cm (3 inches to 5 inches) in diameter when sprayed at a 45 degree angle to a surface white holding the sprayer at 25.4 cm to 30.5 cm (10 to 12 inches)from the surface at room temperature. Without wishing to be bound by theory, Applicants believe that the properties of viscosity and substantial lack of solids of the present composition allow it to be thick enough to provide an appearance and perception of creaminess while permitting the composition to be dispensed as a spray, and particularly in the described advantageous spray pattern.

A creamy opaque salad dressing product in an easy to use spray bottle based on a non-aerosol mechanical pump is preferably provided. The spray bottle delivers a consistent amount of product in every spray, having a discharge volume of about 0.75 ml per spray. Preferably, creamy product delivery amounts to two Calories per spray.

Several examples of application of the inventive system and method are described. The following is by way of example, not by way of limitation, of the principles of the invention to illustrate the best mode of carrying out the invention.

EXAMPLES

EXAMPLE 1

A French Style creamy Vinaigrette salad dressing was prepared by mixing the following ingredients.

TABLE 1. French Style Creamy Vinaigrette Salad Dressing

| Ingredient | Percent |
|---|---|
| Water | BAL* |
| Defoamer | 0.003 |
| Titanium Dioxide Dispersion | 0.032 |
| Soybean Oil | 12.000 |
| Vinegar | 14.333 |
| High Fructose Corn Syrup 42 | 23.500 |

(continued)

| Ingredient | Percent |
|---|---|
| Honey | 2.500 |
| Salt | 2.000 |
| Xanthan Gum - Keltrol SF | 0.122 |
| Carageenan Gum | 0.160 |
| Propylene Glycol Alginate (PGA LVF) (ISP Alginates) | 0.064 |
| Mustard Flour | 0.250 |
| Aquaresin Paprika | 0.155 |
| Calcium Disodium EDTA | 0.007 |
| Apple Cider Vinegar Toner | 0.026 |
| Flavor | 0.515 |
| Sorbic Acid | 0.060 |
| VJI Tomato Juice Clarified 906FP | 5.000 |
| **TOTAL** | **100.000** |

* BAL is balance to 100 %.

STORAGE TEMPERATURE = AMBIENT (20 to 25 deg. Celsius)

SHELF LIFE = 10 MONTHS FROM DOM (date of manufacture)

The ingredients as seen in Table 1 were mixed for 10 minutes. The product had a pH of 3.2, a Titratable Acidity (Ta) of 1.00, a density of 1.07 g/ml and a viscosity of 400 cps (Brookfield, at 25 deg. Celsius). The product appearance was medium orange opaque dressing with no visible particulate.

Further varieties of pourable/sprayable salad dressings according to the present invention were prepared having formulations in the Tables below.

TABLE 2. Ranch Salad Dressing

| INGREDIENT | PERCENT |
|---|---|
| WATER | BAL |
| ANTIFOAM | 0.003 |
| SOYBEAN OIL | 12.000 |
| IFF NAT SC FLAVOR LIQ SNO76624 | 0.075 |
| IFF EMC SOUR CREAM 60874 | 0.425 |
| DISTILLED VINEGAR - 120 GRAIN | 2.083 |
| CORN SYRUP 42/43 | 11.000 |
| SODIUM CHLORIDE GRANULAR | 1.800 |
| CALCIUM DISODIUM EDTA | 0.006 |
| SORBIC ACID | 0.085 |
| XANTHAN GUM - KELTROL SF | 0.140 |
| CARRAGEENAN GUM - VISCARIN | 0.200 |
| PGA LVF | 0.080 |
| LACTIC ACID - 50% | 0.500 |
| MONOSODIUM GLUTAMATE | 0.500 |
| VEGETABLE JUICES | 1.900 |
| TITANIUM DIOXIDE DISPERSION | 0.925 |
| SUGAR | 2.700 |
| PHOSPHORIC ACID 75% | 0.281 |
| AQUARESIN BLACK PEPPER - KALSEC 22- 19-142 | 0.030 |
| SODIUM BENZOATE | 0.015 |
| BETA CAROTENE SOLUTION - 2%CWS | 0.004 |
| RANCH AND OTHER FLAVORS | 0.361 |
| **TOTAL** | **100.00** |

TABLE 3. Honey Mustard Salad Dressing

| INGREDIENT | PERCENT |
|---|---|
| WATER | BAL |
| DISTILLED WHITE VINEGAR 100 GRAIN | 12.00 |
| HIGH FRUCTOSE CORN SYRUP | 15.50 |
| SUGAR | 6.50 |
| SOYBEAN OIL | 12.00 |
| DESSERT HONEY, D.GOLD | 3.00 |
| MUSTARD FLOUR | 0.45 |
| SODIUM CHLORIDE GRANULAR | 1.75 |
| PGA LVF | 0.07 |
| CARAGEENAN GUM | 0.13 |
| XANTHAN GUM - KELTROL SF | 0.16 |
| BETA CAROTENE SOLUTION | 0.06 |
| CARAMEL POWDER | 0.13 |
| Liquid Titanium dioxide dispersion | 0.20 |
| AQUARESIN BLACK PEPPER - KALSEC 22-19-142 | 0.01 |
| SORBIC ACID | 0.08 |
| FLAVORS | 1.29 |
| EDTA | 0.01 |
| | **100.00** |

All the formulations according to the present invention were sprayable from a non-aerosol pump dispenser.

EXAMPLE A (COMPARATIVE)

A creamy Country Italian salad dressing was prepared having the ingredients listed in the Table below.

TABLE 4. CREAMY COUNTRY ITALIAN Salad Dressing

| Ingredients | % |
|---|---|
| WATER | BAL |
| VINEGAR | 9.89 |
| FRUIT & VEG. JUICES & PUREES | 2.22 |
| SUCROSE | 6.42 |
| SOYBEAN OIL | 5.00 |
| SODIUM CHLORIDE GRANULES | 2.00 |
| CARRAGEENAN | 0.20 |
| HERBS | 0.20 |
| XANTHAN GUM, Keltrol TYPE "T" | 0.17 |
| RED BELL Pepper | 0.15 |
| PEPPER GRAN. FLAVOR | 0.12 |
| PROPYLENE GLYCOL Alginate | 0.08 |
| SORBIC ACID | 0.05 |
| VITAMIN E | 0.02 |

(continued)

| Ingredients | % |
| --- | --- |
| EDTA | 0.01 |
| | 100.00 |

The herbs, garlic and peppers were partially hydrated. To 45.4 kg (100 pounds) of the water was added a slurry including Keltrol T xanthan gum. Then the remaining oil was added. After 25 minutes, the remaining water was added. After 10 minutes the preservative, sugar, hydrated spices and herbs, fruit and vegetable purees, vinegar and salt were added.

The resulting salad dressings was translucent (not opaque) and was not capable of being sprayed via a non-aerosol pump dispenser.

Percentages herein are wt % unless indicated otherwise.

**Claims**

1. A creamy salad dressing composition comprising:

    at least 10 wt%, preferably 10 wt% to 20 wt%, triglyceride oil;
    less than 0.5wt% solid particulates having a particle diameter of 0.6 cm or more, based on total weight of the salad dressing composition;
    an aqueous phase comprising water and a gum system comprising a combination of carrageenan, xanthan gum, and alginate; wherein said water comprises 40 % to 75 % by weight of said salad dressing composition;
    wherein said gums comprise 1 % or less by weight of said salad dressing composition;
    wherein said composition exhibits no creaming over a shelf period of at least 5 months; and
    wherein said composition is opaque.

2. The creamy opaque salad dressing composition according to claim 1 wherein said carrageenan comprises iota carrageenan.

3. The creamy opaque salad dressing composition according to any of the preceding claims having a viscosity of less than 1000 cps, preferably 200 cps to 500 cps, as measured on the Brookfield Viscometer, RVT, at room temperature and spindle speed of 110.

4. The composition, according to any of the preceding claims comprising 65 wt to 75wt% water.

5. The creamy opaque salad dressing composition according to any of the preceding claims having 12 wt% soybean oil.

6. The composition according to any of the preceding claims comprising from 0.06 to 0.08 wt% of an alginate.

7. The composition according to any of the preceding claims comprising 0.12 wt% to 0.20 wt% carrageenan.

8. The composition according to any of the preceding claims comprising said xanthan at 0.10 wt% to 0.20 wt% xanthan gum.

9. The composition according to any of the preceding claims further comprising 9 wt% to 15 wt% vinegar.

10. The composition according to any of the preceding claims comprising 2 wt% to 3 wt% preferably 2.10 to 2.40 wt%, salt.

11. The salad dressing composition according to any of the preceding claims which is a creamy opaque dressing selected from the group consisting of creamy French, creamy Ranch, and creamy Honey Mustard dressings.

12. The salad dressing composition according to any of the preceding claims having a pH of 2.85 to 3,30.

13. A creamy opaque salad dressing composition according to claim 1, consisting essentially of; at least 10 % by weight triglyceride oil; less than 0.5 wt% solid particulates having a particle diameter of 0.6 cm or more based on the total weight of the salad dressing composition ; an aqueous phase consisting of water and a gum system consisting of a combination of carrageenan, xanthan gum, and alginate; wherein said water comprises 40 % to 75 % by weight of said salad dressing composition; wherein said gums comprise 1 % or less by weight of said salad dressing composition; and an acidifier; wherein said composition exhibits no creaming.

**14.** The salad dressing according to claim 13 which is dispensable as a spray from a dispensing article.

**15.** The salad dressing according to claim 14, wherein a discharge volume of salad dressing is discharged which is equivalent to two Calories per spray.

**Patentansprüche**

**1.** Sahnige Salat-Dressing-Zusammensetzung, umfassend:

wenigstens 10 Gewichts-%, vorzugsweise 10 Gewichts-% bis 20 Gewichts-%, Triglyceridöl;
weniger als 0,5 Gewichts-% Feststoffpartikel mit einem Partikeldurchmesser von 0,6 cm oder mehr, bezogen auf das Gesamtgewicht der Salat-Dressing-Zusammensetzung;
eine wässrige Phase, umfassend Wasser und ein Gummisystem, umfassend eine Kombination aus Carrageenan, Xanthan-Gummi und Alginat; wobei das Wasser 40 bis 75 Gewichts-% der Salat-Dressing-Zusammensetzung ausmacht; wobei die Gummen 1 Gewichts-% oder weniger der Salat-Dressing-Zusammensetzung ausmachen;
wobei die Zusammensetzung über eine Haltbarkeitsdauer von wenigstens 5 Monaten kein Creaming (Aufrahmen) aufweist und
wobei die Zusammensetzung opak ist.

**2.** Sahnige opake Salat-Dressing-Zusammensetzung gemäß Anspruch 1, wobei das Carrageenan Iota-Carrageenan umfasst.

**3.** Sahnige opake Salat-Dressing-Zusammensetzung gemäß einem der vorangehenden Ansprüche, die eine Viskosität von weniger als 1000 cps, vorzugsweise 200 cps bis 500 cps, hat, wie sie mit dem Brookfield-Viskosimeter, RVT, bei Raumtemperatur und mit einer Spindelgeschwindigkeit von 110 gemessen wird.

**4.** Zusammensetzung gemäß einem der vorangehenden Ansprüche, die 65 bis 75 Gewichts-% Wasser umfasst.

**5.** Sahnige opake Salat-Dressing-Zusammensetzung gemäß einem der vorangehenden Ansprüche, die 12 Gewichts-% Sojabohnenöl hat.

**6.** Zusammensetzung gemäß einem der vorangehenden Ansprüche, die 0,06 bis 0,08 Gewichts-% eines Alginats umfasst.

**7.** Zusammensetzung gemäß einem der vorangehenden Ansprüche, die 0,12 Gewichts-% bis 0,20 Gewichts-% Carrageenan umfasst.

**8.** Zusammensetzung gemäß einem der vorangehenden Ansprüche, die das Xanthan 0,10 Gewichts-% bis 0,20 Gewichts-% Xanthan-Gummi umfasst.

**9.** Zusammensetzung gemäß einem der vorangehenden Ansprüche, die außerdem 9 Gewichts-% bis 15 Gewichts-% Essig umfasst.

**10.** Zusammensetzung gemäß einem der vorangehenden Ansprüche, die 2 Gewichts-% bis 3 Gewichts-%, vorzugsweise 2,10 bis 2,40 Gewichts-%, Salz umfasst.

**11.** Salat-Dressing-Zusammensetzung gemäß einem der vorangehenden Ansprüche, die ein sahniges opakes Dressing ist, das aus der Gruppe, bestehend aus sahnigem French-, sahnigem Ranch-, und sahnigem Honig-Senf-Dressing, ausgewählt ist.

**12.** Salat-Dressing-Zusammensetzung gemäß einem der vorangehenden Ansprüche, die einen pH von 2,85 bis 3,30 hat.

**13.** Sahnige opake Salat-Dressing-Zusammensetzung gemäß Anspruch 1, im Wesentlichen bestehend aus: wenigstens 10 Gewichts-% Triglyceridöl; weniger als 0,5 Gewichts-% Feststoffpartikeln mit einem Partikeldurchmesser von 0,6 cm oder mehr, bezogen auf das Gesamtgewicht der Salat-Dressing-Zusammensetzung; einer wässrigen Phase, bestehend aus Wasser und einem Gummisystem, bestehend aus einer Kombination von Carrageenan, Xanthan-Gummi und Alginat; wobei das Wasser 40 bis 75 Gewichts-% der Salat-Dressing-Zusammensetzung ausmacht; wobei die Gummen 1 Gewichts-% oder weniger der Salat-Dressing-Zusammensetzung ausmachen; und einem Säuerungsmittel, wobei die Zusammensetzung kein Creaming (Aufrahmen) aufweist.

**14.** Salat-Dressing gemäß Anspruch 13, das als Spray aus einem Spendergegenstand abgebbar ist.

**15.** Salat-Dressing gemäß Anspruch 14, wobei ein Abgabevolumen des Salat-Dressings abgegeben wird, das zwei Kalorien pro Sprühvorgang entspricht.

**Revendications**

**1.** Composition de sauce salade onctueuse comprenant :

au moins 10 % en poids, de préférence, de 10 à 20 % en poids, d'huile triglycéridique ;
moins de 0,5 % en poids de matière particulaire solide ayant un diamètre de particule de 0,6 cm ou plus, sur la base du poids total de la composition de sauce salade ;
une phase aqueuse comprenant de l'eau et un système à base de gomme comprenant une combinaison de carraghénine, gomme xanthane, et alginate ; dans laquelle l'eau représente 40 à 75 % en poids de ladite composition de sauce salade ; et lesdites gommes représentent 1 % en poids ou moins de ladite composition de sauce salade ;
ladite composition ne présentant aucun phénomène d'écrémage sur une période de conservation d'au moins 5 mois ; et
ladite composition étant opaque.

**2.** Composition de sauce salade onctueuse et opaque selon la revendication 1, dans laquelle ladite carraghénine comprend la carraghénine iota.

**3.** Composition de sauce salade onctueuse et opaque selon l'une quelconque des revendications précédentes ayant une viscosité inférieure à 1000 cps, de préférence, de 200 à 500 cps, comme mesuré sur le viscosimètre Brookfield RVT, à température ambiante et à une vitesse de broche de 110.

**4.** Composition selon l'une quelconque des revendications précédentes comprenant de 65 à 75 % en poids d'eau.

**5.** Composition de sauce salade onctueuse et opaque selon l'une quelconque des revendications précédentes contenant 12 % en poids d'huile de soja.

**6.** Composition selon l'une quelconque des revendications précédentes comprenant de 0,06 à 0,08 % en poids d'alginate.

**7.** Composition selon l'une quelconque des revendications précédentes comprenant de 0,12 à 0,20 % en poids de carraghénine.

**8.** Composition selon l'une quelconque des revendications précédentes comprenant ledit xanthane à raison de 0,10 à 0,20 % en poids de gomme xanthane.

**9.** Composition selon l'une quelconque des revendications précédentes comprenant, en outre, de 9 à 15 % en poids de vinaigre.

**10.** Composition selon l'une quelconque des revendications précédentes comprenant de 2 à 3 % en poids, de préférence, de 2,10 à 2,40 % en poids de sel.

**11.** Composition de sauce salade selon l'une quelconque des revendications précédentes qui est une sauce salade onctueuse et opaque choisie dans le groupe constitué par les sauces salades onctueuses "vinaigrette", "Ranch", et "moutarde au miel".

12. Composition de sauce salade selon l'une quelconque des revendications précédentes ayant un pH de 2,85 à 3,30.

13. Composition de sauce salade onctueuse et opaque selon la revendication 1, essentiellement constituée d'au moins 10 % en poids d'huile triglycéridique ; de moins de 0,5 % de matière particulaire solide ayant un diamètre de particule de 0,6 cm ou plus, sur la base du poids total de la composition de sauce salade ; d'une phase aqueuse comprenant de l'eau et un système à base de gomme comprenant une combinaison de carraghénine, gomme xanthane, et alginate ; dans laquelle l'eau représente de 40 à 75 % en poids de ladite composition de sauce salade ; et lesdites gommes représentent 1 % en poids ou moins de ladite composition de sauce salade ; et d'un acidifiant ; ladite composition ne présentant aucun phénomène d'écrémage.

14. Sauce salade selon la revendication 13 qui est distribuée sous la forme d'une pulvérisation à partir d'un article du type distributeur.

15. Sauce salade selon la revendication 14, dans laquelle un volume déchargé de sauce salade équivalant à deux calories est distribué à chaque pulvérisation.

**EP 2 166 880 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6544573 B, Wilson
- EP 0238330 A
- EP 6060106 A, Breitbart
- US 5516544 A
- US 6447824 A
- US 20070237878 A1
- US 20070237864 A1